Europäisches Patentamt

(19) European Patent Office

Office européen des brevets

(11) Veröffentlichungsnummer: **0 160 978**
**B1**

(12) **EUROPÄISCHE PATENTSCHRIFT**

(45) Veröffentlichungstag der Patentschrifft:
28.02.90

(21) Anmeldenummer: 85105607.7

(22) Anmeldetag: 07.05.85

(51) Int. Cl.⁵: **B 65 D 77/20, B 65 D 81/24,**
**B 32 B 3/10**

(54) Verschlussmembran für Behälter mit gas-entwickelndem Füllgut.

(30) Priorität: 07.05.84 DE 3416752

(43) Veröffentlichungstag der Anmeldung:
13.11.85 Patentblatt 85/46

(45) Bekanntmachung des Hinweises auf die Patenterteilung:
28.02.90 Patentblatt 90/09

(84) Bennante Vertragsstaaten:
CH DE FR GB IT LI

(56) Entgegenhaltungen:
EP-A-0 084 944
EP-A-0 086 057
US-A-3 435 948

(73) Patentinhaber: Nyffeler, Corti AG
CH-3422 Kirchberg BE (CH)

(72) Erfinder: Lamping, Alfons, Dr.
route de Combarod 5
CH-1711 Corminboeuf (CH)
Erfinder: Messerli, Fritz
Tschiffeliweg 2a
CH-3422 Kirchberg (CH)
Erfinder: Tellenbach, Walter
Gyrischachen 53
CH-3400 Burgdorf (CH)

(74) Vertreter: Barz, Peter, Dr.
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Siegfriedstrasse 8
D-8000 München 40 (DE)

2

## Beschreibung

Die Erfindung betrifft eine heißsiegelbare Verschlußmembran für Behälter mit Gas-entwickelndem Füllgut, wie Kefir.

Produkte, die aufgrund ihrer Zusammensetzung noch nach der Herstellung und Abfüllung Gase entwickeln, wie z. B. Kefir, lassen sich nicht oder nur schlecht in allseitig geschlossene Behälter verpacken. Die Gasentwicklung führt zu einem Überdruck in dem Behälter und zu einer Bombage des Deckels, wodurch die Behälter nicht mehr stapelbar sind.

Eine bekannte Lösung dieses Problems besteht darin, den Deckel mit einem circa 2 mm großen Loch zu versehen, aus dem Gase entweichen können. Dies hat jedoch den Nachteil, daß durch die Deckelöffnung eine Kontamination z. B. mit Schmutz oder Bakterien erfolgen kann, die das Füllgut in seiner Verbrauchsqualität beeinträchtigt.

In der US-A-3 435 948 wird eine Verschlußmembran für einen Behälter mit trockenem Füllgut beschrieben, welche einen Gasaustausch ermöglicht. Bei pastösen oder flüssigen Füllgütern hat diese Membran jedoch den Nachteil, daß das Füllgut an die äußere Papierschicht gelangen kann und darin unansehnliche Flecken erzeugt. Außerdem sind Stanzlinge aus dem vorgeschlagenen Verbundmaterial in feuchter Umgebung (z. B. Abfüllsälen von Molkereien) nicht formstabil genug, um maschinell verarbeitet werden zu können.

Gegenstand der Erfindung ist eine Verschlußmembran für Behälter mit Gas-entwickelndem Füllgut mit mindestens zwei Verbundkomponenten, die durch eine Kaschiermittelschicht miteinander verbunden sind, wobei zumindest die dem Füllgut zugewandte Verbundkomponente den Gasaustausch ermöglichende mikrofeine Durchbrüche aufweist, welche dadurch gekennzeichnet ist, daß die äußere Verbundkomponente aus einer Aluminium- oder Kunststoffolie besteht, unter der eine den lateralen Gasaustausch ermöglichende Schicht angeordnet ist.

Diese den lateralen Gasaustausch ermöglichende Schicht kann z. B. eine in Form einer Vielzahl kleiner, einander nicht berührender Flächen aufgetragene Kaschiermittelschicht oder eine Papierschicht sein.

Die erfindungsgemäße Verschlußmembran besteht aus mindestens 2, vorzugsweise 2 oder 3 Verbundkomponenten, wobei die äußere Verbundkomponente aus einer Aluminium- oder Kunststoffolie und die übrigen Verbundkomponenten aus Aluminium- oder Kunststoffolien oder Papier bestehen.

Als Kunststoffolien eignen sich z. B. solche aus Polyethylen, Polypropylen, Polystyrol, Polycarbonat, Polyamid und Polyethylenglykolterephthalat.

Die Papierschicht besteht z. B. aus Papier oder papierähnlichen, natürlichen oder synthetischen Materialien. Besonders bevorzugt ist speziell ausgerüstetes Papier, das mikrobendicht (sogenanntes medizinisches Papier) und wasserfest ist, um eine Rolltendenz bei der Lagerung und Verarbeitung in Feuchtatmosphäre zu vermeiden.

Zum Verkleben der Verbundkomponenten geeignete Kaschiermittel sind z. B. Polyurethan-Zweikomponentenkleber und lösungsmittelfreie Ein- oder Zweikomponenten-Kaschierkleber.

Die Verbundkomponenten und Kaschiermittel werden in üblichen Schichtdicken angewandt. So haben die Aluminiumfolien z. B. eine Dicke von 0,007 bis 0,030 mm und die Kunststoffolien z. B. eine Dicke von 0,015 bis 0,050 mm. Die Papierschichten haben gewöhnlich ein Flächengewicht von z. B. 15 bis 50 g/m².

Erfindungsgemäß weist zumindest die dem Füllgut zugewandte Verbundkomponente den Gasaustausch ermöglichende mikrofeine Durchbrüche auf, z. B. Löcher, Schnitte, Schlitze oder Öffnungen von unregelmäßigem Querschnitt. In speziellen Ausführungsformen können jedoch auch eine oder mehrere andere Verbundkomponenten derartige Durchbrüche aufweisen. Hierbei müssen die Durchbrüche bzw. Öffnungen in den verschiedenen Verbundkomponenten nicht in Deckung ausgerichtet sein, sondern sind vorzugsweise gegeneinander versetzt, um ein Eindringen von Kontaminationen durch die Verschlußmembran zu verhindern.

In einer bevorzugten Ausführungsform werden die den Gasaustausch ermöglichenden mikrofeinen Durchbrüche durch Perforation erzeugt. In Abhängigkeit von der gewünschten Gasdurchlässigkeit wird die Perforationsdichte geeignet eingestellt und beträgt z. B. beim Verpacken von Kefir 900 bis 1 000 Perforationen/dm². Die mittlere Lochgröße beträgt vorzugsweise 0,1 bis 0,2 mm. Hierbei kann die Perforation so eingestellt werden, daß zwar ausreichende Gasdurchlässigkeit (z. B. 5 cm³/dm² x h), nicht aber Flüssigkeitdurchlässigkeit gegeben ist.

In einer erfindungsgemäßen Auführungsform wird die Kaschiermittelschicht zwischen den Verbundkomponenten nicht vollflächig, sondern als unterbrochene, den lateralen und vertikalen Gasaustausch ermöglichende Schicht aufgetragen. Dies kann z. B. mit Hilfe von gerasterten Zylindern erfolgen, mit denen das Kaschiermittel in Form einer Vielzahl kleiner, einander nicht berührender Flächen aufgetragen wird.

Die erfindungsgemäße Verschlußmembran kann auf der dem Füllgut zugewandten Seite mit einer Siegelschicht, vorzugsweise einer Heißsiegelschicht, versehen sein, um eine feste Verbindung mit dem Behälter zu ergeben. Falls die dem Füllgut zugewandte Verbundkomponente selbst Heißsiegeleigenschaften besitzt, wie dies bei Polyethylen oder Polypropylen der Fall ist, erübrigt sich eine derartige Heißsiegelschicht.

Da viele Heißsiegellacke keine oder eine zumindest vernachlässigbare Gasbarriere darstellen, kann die Heißsiegelschicht vollflächig aufgetragen werden. Zur Verbesserung des Gasaustausches kann man sie jedoch z. B. ähnlich wie die Verbundkomponenten perforieren oder ähnlich wie die Kaschiermittelschicht in Form kleiner, einander nicht berührender Flächen auftragen.

Im folgenden wird die Erfindung anhand bevorzugter Ausführungsformen unter Bezug auf die Zeichnung näher erläutert. Es zeigen:

Fig. 1 eine Ansicht der dem Füllgut zugewandten Seite einer Ausführungsform einer erfindungsgemäßen Verschlußmembran;

Fig. 2 einen schematischen Querschnitt durch eine Ausführungsform einer erfindungsgemäßen Verschlußmembran;

Fig. 3 einen schematischen Querschnitt durch eine weitere Ausführungsform einer erfindungsgemäßen Verschlußmembran.

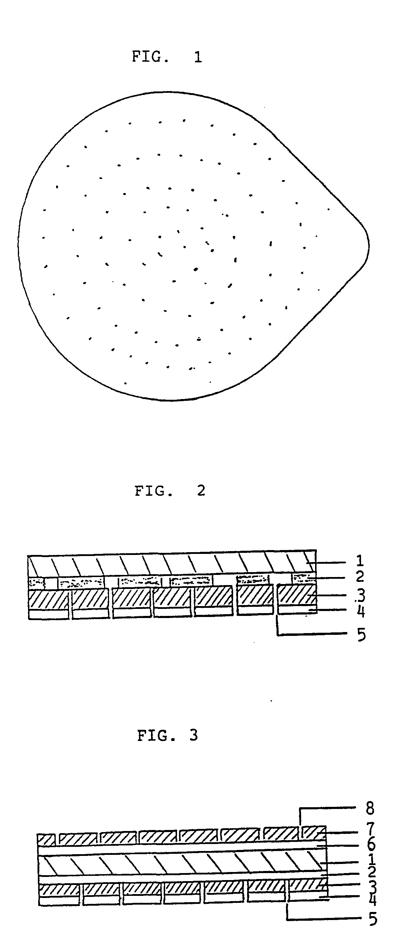

Die in Fig. 1 und 2 dargestellte Ausführungsform einer erfindungsgemäßen Verschlußmembran besteht aus 2 Verbundkomponenten 1 und 3, z. B. in Form von Einzelfolien aus Aluminium oder Kunststoffen, wie Polyethylen, Polypropylen, Polystyrol, Polycarbonat, Polyamid oder Polyethylenglykolterephthalat. Beide Verbundkomponenten 1 und 3 sind über eine Kaschiermittelschicht 2 miteinander verbunden, die z. B. mittels einer Rasterwalze in Form einer Vielzahl kleiner, einander nicht berührender Flächen aufgetragen worden ist. Auf der dem Füllgut zugewandten Verbundkomponente 3 befindet sich eine Heißsiegelschicht 4. Sowohl die Verbundkomponente 3 als auch die Heißsiegelschicht 4 weisen zur Verbesserung des Gasaustausches Perforationen 5 auf.

Die in Fig. 3 dargestellte Ausführungsform einer erfindungsgemäßen Verschlußmembran besteht aus einer Papierschicht 1, die über eine Kaschiermittelschicht 2 mit einer Aluminiumschicht 3 verbunden ist, die außenseitig eine Heißsiegelschicht 4 aufweist. Sowohl die Aluminiumschicht 3 als auch die Heißsiegelschicht 4 sind perforiert.

An der Oberseite ist die Verschlußmembran von Fig. 3 über eine auf die Papierschicht 1 aufgebrachte Kaschiermittelschicht 6 mit einer ebenfalls perforierten Aluminiumschicht 7 versehen. Die Perforationen 8 an der Oberseite der Verschlußmembran sind vorzugsweise gegen die Perforationen 5 an der Unterseite versetzt, um die Filterwirkung zu verbessern.

Obwohl in Fig. 3 eine perforierte Aluminiumschicht 7 dargestellt ist, kann auch eine entsprechende nicht-perforierte Aluminiumfolie 7 angewandt werden. Ferner können anstelle der Aluminiumschichten 3 und 7 geeignete Kunststofffolien eingesetzt werden, wobei sich gegebenenfalls die Heißsiegelschicht 4 erübrigt.

## Patentansprüche

1. Verschlußmembran für Behälter mit Gas-entwickelndem Füllgut mit mindestens zwei Verbundkomponenten, die durch eine Kaschiermittelschicht miteinander verbunden sind, wobei zumindest die dem Füllgut zugewandte Verbundkomponente den Gasaustausch ermöglichende mikrofeine Durchbrüche aufweist, dadurch gekennzeichnet, daß die äußere Verbundkomponente aus einer Aluminium- oder Kunststoffolie besteht, unter der eine den lateralen Gasaustausch ermöglichende Schicht angeordnet ist.

2. Verschlußmembran nach Anspruch 1, dadurch gekennzeichnet, daß die den lateralen Gasaustausch ermöglichende Schicht eine in Form einer Vielzahl kleiner, einander nicht berührender Flächen aufgetragene Kaschiermittelschicht ist.

3. Verschlußmembran nach Anspruch 1, dadurch gekennzeichnet, daß die den lateralen Gasaustausch ermöglichende Schicht eine Papierschicht ist.

4. Verschlußmembran nach Anspruch 3, dadurch gekennzeichnet, daß die Papierschicht aus mikrobendichtem, wasserfestem Papier oder papierähnlichem Material besteht.

5. Verschlußmembran nach Anspruch 3 oder 4, dadurch gekennzeichnet, daß die äußere Verbundkomponente Perforationen aufweist, die vorzugsweise gegen die Perforationen der dem Füllgut zugewandten Verbundkomponente versetzt sind.

6. Verschlußmembran nach einem der Ansprüche 1 bis 5, dadurch gekennzeichnet, daß die Perforationsdichte 900 bis 1 000 Perforationen/dm$^2$ und die mittlere Lochgröße 0,1 bis 0,2 mm betragen.

7. Verschlußmembran nach einem der Ansprüche 1 bis 6, dadurch gekennzeichnet, daß die übrigen Verbundkomponenten aus Aluminium- oder Kunststoffolien oder Papier bestehen.

8. Verschlußmembran nach einem der Ansprüche 1 bis 7, dadurch gekennzeichnet, daß auf der dem Füllgut zugewandten Verbundkomponente eine gegebenenfalls perforierte Heißsiegelschicht vorhanden ist.

## Claims

1. A sealing membrane for containers filled with gasevolving products comprising at least two composite components bonded by means of a layer of a laminating agent, with at least the composite component facing the product having micro-fine openings that allow gas exchange, characterized in that the outer composite component consists of an aluminum foil or plastic film, under which a layer allowing lateral gas exchange is provided.

2. A sealing membrane according to claim 1, characterized in that the layer allowing lateral gas exchange is a layer of a laminating agent applied

5

in the form of a multiplicity of small areas not contacting each other.

3. A sealing membrane according to claim 1, characterized in that the layer allowing lateral gas exchange is a paper layer.

4. A sealing membrane according to claim 3, characterized in that the paper layer consists of microbeimpermeable, water-proof paper or paper-like material.

5. A sealing membrane according to claims 3 or 4, characterized in that the outer composite component exhibits perforations preferably staggered against the perforations of the composite component facing the product.

6. A sealing membrane according to any one of claims 1 to 5, characterized in that the perforation density amounts to 900 to 1,000 perforations/dm$^2$, and the average hole size is 0.1 to 0.2 mm.

7. A sealing membrane according to any one of claims 1 to 6, characterized in that the other composite components consist of an aluminum foil or plastic film or paper.

8. A sealing membrane according to any one of claims 1 to 7, characterized in that the composite component facing the product is provided with a heat-sealing layer, which is perforated, if appropriate.

**Revendications**

1. Membrane de fermeture pour un récipient dont le contenu dégage des gaz, comportant au moins deux composants formant un composite, qui sont reliés l'un à l'autre par une couche intermédiaire de contrecollage, au moins le composant du composite tourné vers le contenu présentant des ouvertures extrêmement fines permettant l'échange de gaz, caractérisée en ce que le composant extérieur du composite consiste en une feuille d'aluminium ou de matière plastique, sous laquelle est disposée une couche permettant l'échange latéral de gaz.

2. Membrane de fermeture selon la revendication 1, caractérisée en ce que la couche permettant l'échange latéral de gaz est une couche intermédiaire de contrecollage appliquée sous forme d'une multiplicité de petites surfaces sans contact l'une avec l'autre.

3. Membrane de fermeture selon la revendication 1, caractérisée en ce que la couche permettant le passage latéral de gaz est une couche de papier.

4. Membrane de fermeture selon la revendication 3, caractérisée en ce que la couche de papier est constituée d'un papier, ou d'un matériau similaire

6

au papier, arrêtant les microbes et résistant à l'eau.

5. Membrane de fermeture selon la revendication 3 ou 4, caractérisée en ce que le composant extérieur du composite présente des perforations qui sont de préférence décalées par rapport aux perforations du composant du composite tourné vers le contenu.

6. Membrane de fermeture selon l'une des revendications 1 à 5, caractérisée en ce que la densité de perforation est de 900 à 1 000 perforations/dm$^2$, et en ce que la dimension moyenne de trou est de 0,1 à 0,2 mm.

7. Membrane de fermeture selon l'une des revendications 1 à 6, caractérisée en ce que les autres composants du composite consistent en des feuilles d'aluminium ou de matières plastiques ou en papier.

8. Membrane de fermeture selon l'une des revendications 1 à 7, caractérisée en ce qu'on dispose sur le composant du composite tournée vers le contenu une couche thermosoudable éventuellement perforée.

FIG. 1

FIG. 2

FIG. 3